# EUROPEAN PATENT APPLICATION

(11) **EP 4 721 932 A1**
(43) Date of publication of application: **08.04.2026**
(21) Application number: 24204738.9
(22) Date of filing: 04.10.2024
(51) Int. Cl.: B25J 9/16, E02F 3/28

(54) **METHODS, SYSTEMS, AND COMPUTER PROGRAM PRODUCTS FOR CONTROLLING AUTONOMOUS MATERIAL HANDLING MACHINES**

(71) Applicant: Gravis Robotics AG, 8050 Zurich (CH)
(72) Inventor: Nubert, Julian, 8005 Zurich (CH); Spinelli, Filippo, 8008 Zurich (CH); Egli, Pascal, 5400 Baden (CH); Nan, Fang, 8006 Zurich (CH)
(74) Representative: E. Blum & Co. AG

(57) **Abstract**

The invention is notably directed to a computer-implemented method of controlling an autonomous material handling machine (1). The machine includes a lower structure (12), an upper structure (11), an arm (10) with arm joints actuated by arm joint actuators (461, 462), and an end effector (110) suspended from the arm so that it can swing as a damped pendulum. The arm (10) is pivotably connected to the upper structure, which can rotate relative to the lower structure through a slew joint (14), around a rotation axis of the slew joint, thanks to a slew motor (464). The method comprises repeatedly performing (S30) algorithmic cycles. Each algorithmic cycle comprises: updating (S31) state data (204), which comprise states of the arm joints and a moment of inertia of the material handling machine (1) with respect to the rotation axis, based on signals received (S20) from sensors of the material handling machine (1); generating (S35), by a control policy (2065) trained with reinforcement learning, control commands (203) for the slew motor (464) and the arm joint actuators (461, 462), based on the updated state data (204), and possibly a history (204h) thereof, a history (203h) of control commands previously generated by the control policy, and a target position constraint for the end effector (110); and updating (S36) the history of control commands according to the control commands (203) generated last and instructing (S37) to form control signals based on the generated control commands to control (S40) the slew motor (464) and the arm joint actuators (461, 462). The invention is further directed to related systems and computer program products.

## Description

### TECHNICAL FIELD

The invention relates to the field of computer-implemented methods of controlling autonomous material handling machines, as well as related computerized systems and computer program products. In particular, it is directed to methods that generate control commands based on state data that comprise states of arm joints, the slew joint, and a swinging end effector of the machine, as well as a moment of inertia of the machine, measured with respect to a rotation axis of a slew joint, through which an upper structure of the machine can rotate relative to its lower structure.

### BACKGROUND

Material handling machines (also called material handlers) find application in diverse settings, including construction sites, recycling centres, ports, and warehouses. They are indispensable for efficiently manoeuvring and sorting heavy materials such as scrap metal, bulk cargo, logs, and construction debris. Their most notable characteristic is a free-swinging end effector. An example of such a machine is described in US12012314B2.

Besides reduced manufacturing costs compared to fixed attachments, a material handler also offers operational advantages: gravity alignment facilitates grabbing piled material, and the swinging of the end effector can be exploited to enlarge the reachable task space by throwing the load. While beneficial for certain tasks, this setup and the hydraulic actuation make manoeuvring extremely complex, even for trained operators. The hydraulic cabin-rotation motor is often hampered by large delays and binary braking dynamics, making accurate motion control (e.g., stopping at the desired position) challenging. Furthermore, end-effector oscillations can cause severe damage to the machine if they are not damped adequately.

Automating such machines would enable continuous operation and avoid the need for human drivers in harsh conditions, thereby improving efficiency and safety. However, precise and safe control of heavy material handling machines presents numerous challenges due to the hard-to-model hydraulically actuated joints and the need for collision-free trajectory planning with a free-swinging end effector. Accordingly, the inventors set themselves the challenge of finding a solution allowing the end effector's oscillations to be kept under control.

### SUMMARY

According to a first aspect, the invention is embodied as a computer-implemented method of controlling an autonomous material handling machine, which includes a lower structure, an upper structure, an arm with arm joints actuated by arm joint actuators, and an end effector suspended from the arm so that it can swing as a damped pendulum. The arm is pivotably connected to the upper structure, which can rotate relative to the lower structure through a slew joint, around a rotation axis of the slew j oint, thanks to a slew motor.

The method relies on a control policy trained with reinforcement learning (RL). It repeatedly performs algorithmic cycles, where each cycle comprises updating state data, generating control commands, updating a history of control commands, and instructing to form control signals. The state data comprise a moment of inertia of the material handling machine as well as states of the arm joints, the slew joint, and the end effector. The moment of inertia is measured with respect to the rotation axis of the slew joint. The state data are updated based on signals received from sensors of the material handling machine (e.g., proprioceptive sensors on board the machine).

The control commands are commands for the slew motor and the arm joint actuators. In embodiments, and depending on the task and configuration of the machine and the end effector, such commands may further include commands for the end effector (e.g., rotation, open/close). These commands are generated by the control policy based on the updated state data, the history of control commands previously generated by the control policy, and a target position constraint for the end effector. The history of control commands is eventually updated according to the control commands generated last. Additionally, the control policy may optionally rely on a history of previous states of the machines to generate the commands. In that case, the history of states also needs to be updated. Once the commands have been generated, the method instructs to form control signals based on the generated control commands to control the slew motor and the arm j oint actuators.

The above method concerns steps performed at runtime, i.e., after training of the control policy and during the deployment of the trained control policy, which is used to control both the slew motor and arm joints. It will be apparent to the skilled person that actions taken by the policy at runtime are based on inputs that must be consistent with inputs used during the learning phase.

As the inventors realized, in the present context, the location of the end effector impacts the moment of inertia of the material handling machine, just like the moment of inertia of someone sitting in a swivel chair would change in accordance with the positions of their arms and legs. In turn, the inertia influences the behaviour of the slew joint, hence the benefit of generating commands by an RL control policy based on updated states that include the moment of inertia. Eventually, control signals are formed based on outputs from the control policy to control the arm joint actuators and the slew motor.

The present RL approach makes it possible for the control policy to leverage the machine dynamics to improve accuracy by taking into account the moment of inertia. In practice, this approach makes it possible to achieve large actuation speeds, while minimizing oscillations of the end effector. That is, the policy can suitably handle the passive joints (i.e., where the damped oscillations take place), as it can be trained explicitly to keep the end effector oscillations under control by generating appropriate control commands for the active joints (i.e., the actuated joints), thanks to suitable rewards and truncations.

In embodiments, the control commands are generated based on one or more target position constraints defined in a task space, according to one or more target positions for the end effector, whereas the generated control commands correspond to control commands in a configuration space of the machine. This configuration space is subtended by the joint space, i.e., the space of possible configurations of the slew joint and the arm joints. In variants, the target position constraints could be defined in that same configuration space. However, this would first require converting an initial goal from the task space to the configuration space. Thus, it is preferred to generate control commands based on target position constraints formulated in the task space, e.g., using cartesian coordinates of positions to be reached by the end effector. This means that no conversion is required as the policy has already learned to generate outputs in the configuration space, based on inputs in the task space.

In embodiments, the one or more target position constraints are defined according to at least two target positions, so as to delimit a space of acceptable paths for the end effector. In practice, such target positions correspond to positions that should ideally be reached sequentially by the end effector. Using such target position constraints results in narrowing down the possible paths for the end effector, while keeping some leeway, at least between any two consecutive target positions. This facilitates obstacle avoidance and eventually improves safety.

An easy implementation is for the one or more constraints to define a tubular shape encompassing two or more of said target positions (possibly all of the target positions). That is, the end effector must remain within that tubular shape when being actuated according to the generated control signals. This allows some additional leeway around the target positions (and not just in between) and results in smoother paths in practice. Preferably, the tubular shape has a non-constant section between the two target positions, which makes it possible to relax constraints where accuracy is not necessary.

In preferred embodiments, the method further comprises generating said commands based on a window of target positions for the end effector, said window including lookahead target positions, wherein a number of the target positions contained in said window is kept constant by duplicating a last target position in the window if the end effector approaches the last target position. This makes it possible to keep the window size (and in turn the full vector of observations taken as input by the policy) constant at all times.

In embodiments, the end effector is one that can be actuated to handle a load, e.g., a grabber. In that case, the step of generating the control commands further comprises generating, by the policy, control commands for the end effector to pick up or release its load, based on a constraint defining a location where said load is to be picked up or released. This allows a more complete autonomous operation of the machine.

In embodiments, the method further comprises a preliminary step of training the policy in simulation only, with RL. That is, a behaviour of the material handling machine is simulated to train the control policy. Training only in simulation allows the training to be significantly accelerated, while allowing a large number of configurations to be explored, whether in terms of paths, machines, and end effectors.

In embodiments, the behaviour of the material handling machine is simulated using one or more models of the arm joint actuators and the slew motor, as well as a first-principles model of the suspended end effector. This means that the policy is trained based on outputs of the one or more models and the first-principles model. This allows for more realistic modelling, which also benefits the estimation of machine states. Preferably, the first-principles model is one that models the end effector as a damped pendulum. More preferably, it models the end effector as a double pendulum with linearly oscillating support, with decoupled rotations with respect to two axes, which are perpendicular to each other and are further perpendicular, each, to the rotation axis of the slew joint in the default configuration of the end effector, when hanging at rest.

In embodiments, the one or more models comprise one or more data-driven models to model the slew motor. In addition, such models include either a first-principles model or one or more data-driven models to model each of the arm joint actuators. For example, each joint or motor can be modelled thanks to a first data-driven model and a second data-driven model, which include a first neural network and a second neural network, respectively. The first neural network is a network that has been trained to predict evolutions of pressures at the respective joint from input commands. The second neural network is a network that has been trained to predict velocities of the respective j oint from evolutions of pressures at this j oint. The first and second networks are used to increase the simulation fidelity, as opposed to mere rigid-body simulations. In variants to using two networks, a single neural network can be used to directly predict velocity references from input commands.

In embodiments, the material handling machine is a hydraulic machine and the sensors include proprioceptive sensors. The latter are configured to provide feedback signals encoding information about: (i) pressures at the slew joint and, preferably, at the arm joints, or at least some of the arm joints, and/or (ii) velocities of the slew joint and, preferably, of at least some of the arm joints. Alternatively, application can also be made to material handling machines equipped with one or more electric joints (notably for the slew joint). In that case, only information about velocities is needed.

In embodiments, the generated control commands include, capture, or somehow reflect, velocity references for the arm joint actuators of a boom and a stick of the arm, and further include valve commands for the slew motor. For example, the generated control signals are low-level control signals for low-level controllers of the slew motor and the arm joint actuators. The low-level control signals are generated at a frequency of between 5 and 50 Hertz, preferably of 10 Hertz.

According to another aspect, the invention is embodied as a computerized system for controlling an autonomous material handling machine as described above. That is, the machine includes a lower structure, an upper structure, an arm with arm joints actuated by arm joint actuators, and an end effector suspended from the arm so that it can swing as a damped pendulum. The arm is pivotably connected to the upper structure, which can rotate relative to the lower structure through a slew joint, around a rotation axis of the slew joint, thanks to a slew motor. The system comprises: a physical interface adapted to receive signals from a set of sensors, e.g., proprioceptive sensors, which are on board the material handling machine; and processing means configured to perform all the steps of a method according to any of the embodiments as described above.

According to a final aspect, the invention is embodied as a computer program product for controlling an autonomous material handling machine as described above. The computer program product comprises a computer readable storage medium having program instructions embodied therewith. The program instructions are executable by processing means of a controller to cause the latter to perform all the steps of a method according to any of the embodiments described above.

### BRIEF DESCRIPTION OF THE DRAWINGS

These and other objects, features and advantages of the present invention will become apparent from the following detailed description of illustrative embodiments thereof, which is to be read in connection with the accompanying drawings. The illustrations are for clarity in facilitating one skilled in the art in understanding the invention in conjunction with the detailed description. In the drawings:
FIG. 1 schematically illustrates a material handling machine that includes a lower structure, an upper structure, an arm with arm joints actuated by arm joint actuators, and an end effector suspended from the arm so that it can swing as a damped pendulum, as in embodiments;
FIG. 2A is a flow diagram illustrating the training of neural networks, with a view to subsequently training a control policy in simulation, as in embodiments;
FIG. 2B is a flow diagram illustrating the training of a control policy in simulation, thanks to neural networks trained as in FIG. 2A, and a first-principles model, as in embodiments;
FIG. 2C is a flow diagram illustrating how the resulting control policy can autonomously control a material handling machine such as shown in FIG. 1, as in embodiments;
FIG. 3 is a flowchart illustrating high-level steps of a method of controlling an autonomous material handling machine, according to embodiments;
FIG. 4 is a block diagram schematically illustrating components of a material handling machine, which includes a control system and sensors, to enable an autonomous operation of the machine, according to embodiments;
FIG. 5 schematically illustrates an end effector of a material handling machine modelled as a double pendulum with linearly oscillating support, as in embodiments; and
FIGS. 6A - 6C schematically illustrates a movement of an end effector of a material handling machine, where this movement is constrained according to consecutive waypoints and a tubular shape defined in the task space, as involved in embodiments.

The accompanying drawings show simplified representations of devices or parts thereof, as involved in embodiments. Technical features depicted in the drawings are not necessarily to scale. Similar or functionally similar elements in the figures have been allocated the same numeral references, unless otherwise indicated.

Methods, computerized systems, and computer program products embodying the present invention will now be described, by way of non-limiting examples.

### DETAILED DESCRIPTION OF EMBODIMENTS OF THE INVENTION

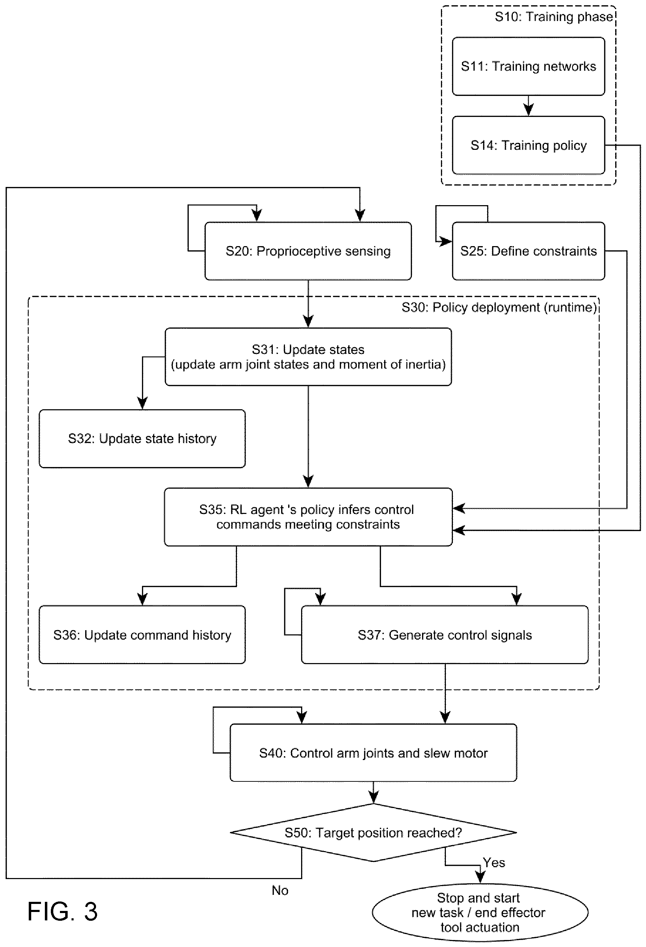

The following description is structured as follows. General embodiments and high-level variants are described in section 1. Section 2 addresses particularly preferred embodiments. Section 3 concerns technical implementation details. Note, the present method and its variants are sometimes collectively referred to as the "present methods." All references Sn refer to methods steps of the flowcharts of FIG. 3, while numeral references pertain to devices, components, and concepts involved in embodiments of the present invention.

### 1. General embodiments and high-level variants

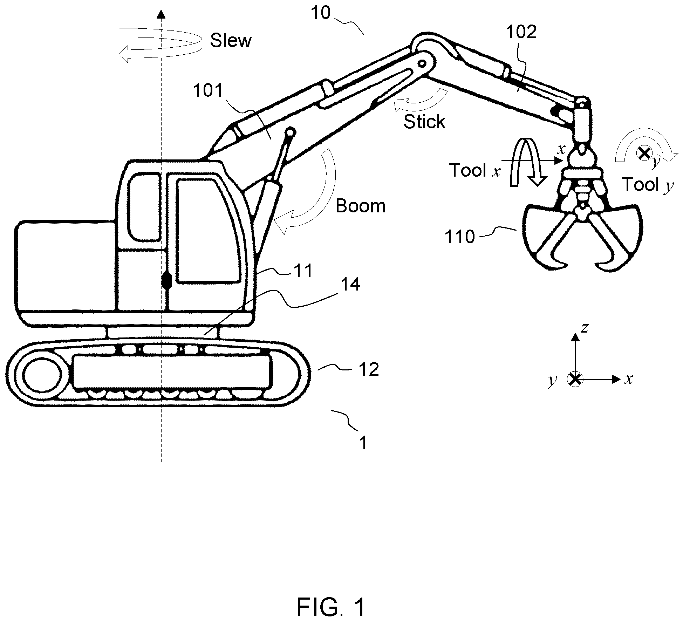

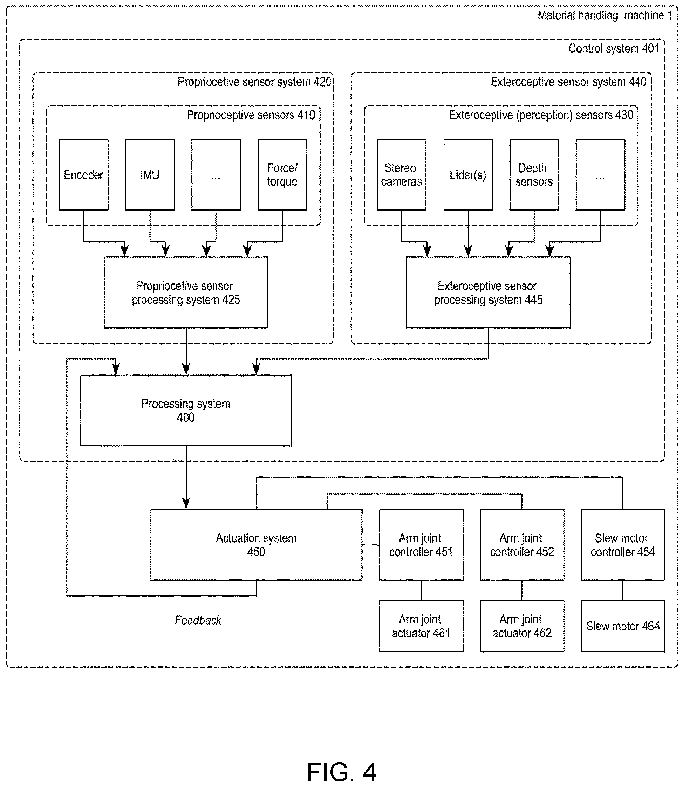

A first aspect of the invention is now described in detail, in reference to FIGS. 1, 2C, and 3. This aspect concerns a computer-implemented method of controlling an autonomous material handling machine 1, after deployment of a control policy trained with reinforcement learning (RL). This method is implemented by a computerized system such as shown in FIG. 4. The system 401 concerns another aspect of the invention, which is described later. The material handling machine 1 can for instance be a crawler or mobile machine (e.g., a mobile crane). It is typically a hydraulic machine (as assumed in FIG. 1), although it may also be an electric or partially electric machine.

In the example of in FIG. 1, the machine 1 includes a lower structure 12 and an upper structure 11. It further includes an arm 10 with arm joints, which are actuated by arm j oint actuators. The actuators are denoted by numeral references 461, 462 in the diagram of FIG. 4. The arm 10 is pivotably connected to the upper structure 11. The arm joints connect, on the one hand, the arm links (boom 101 and stick 102) to one another and, on the other hand, the arm 10 to the upper structure 11 of the machine 1.

An end effector 110 is suspended from the arm 10, such that the end effector can swing as a damped pendulum, during operation of the machine 1. The end effector 110 can for instance be a clamshell grab (as assumed in FIG. 1), a clamshell bucket, an orange peel grab, a multi-tine grapple, a wood grapple, a timber grab, a sorting grapple, a loading hook, etc. Note, the machine 1 can actually be an excavator or a construction machine (e.g., in the form of a crane, a bagger, or a crawler). Still, in the present context, the machine is assumed to be equipped with a swinging end effector.

The upper structure 11 can rotate relative to the lower structure 12 through a slew joint 14, around a rotation axis of the slew joint, thanks to a slew motor 464. In FIG. 1, the rotation axis of the slew joint is parallel to the z-axis. The upper structure 11 is typically an upper carriage with a cabin (as in FIG. 1), which can rotate with respect to the lower structure (e.g., a crawler undercarriage, as assumed in FIG. 1), thanks to the slew motor 464.

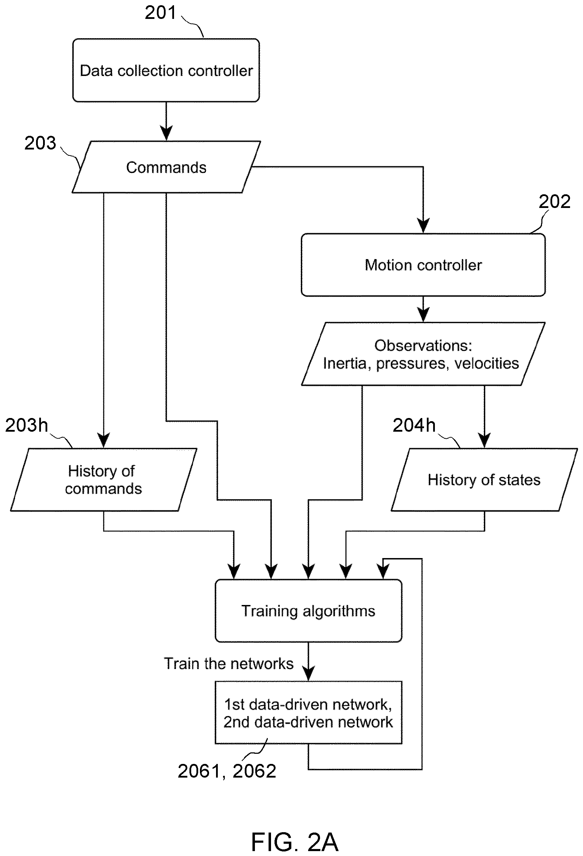

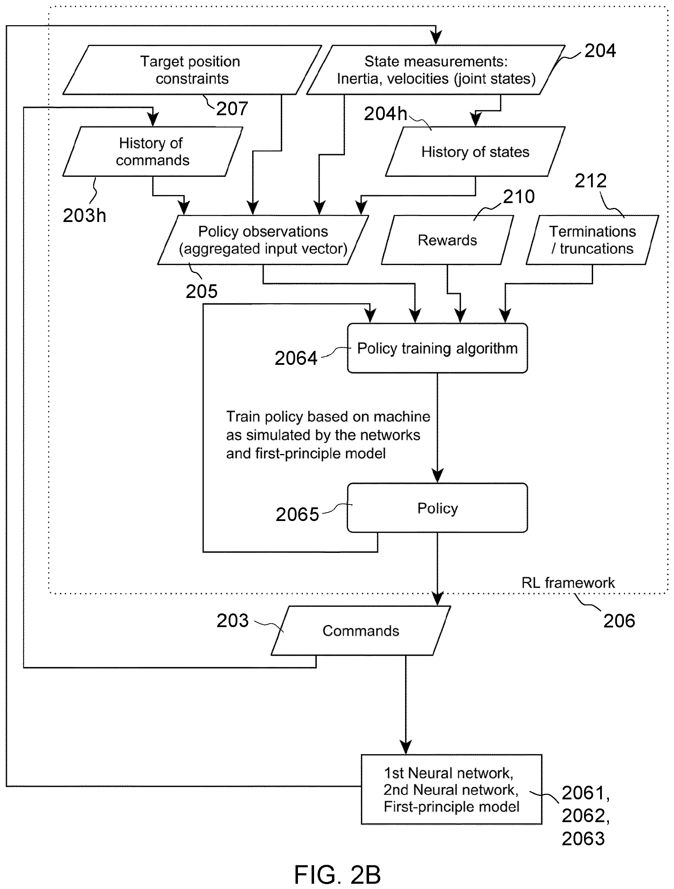

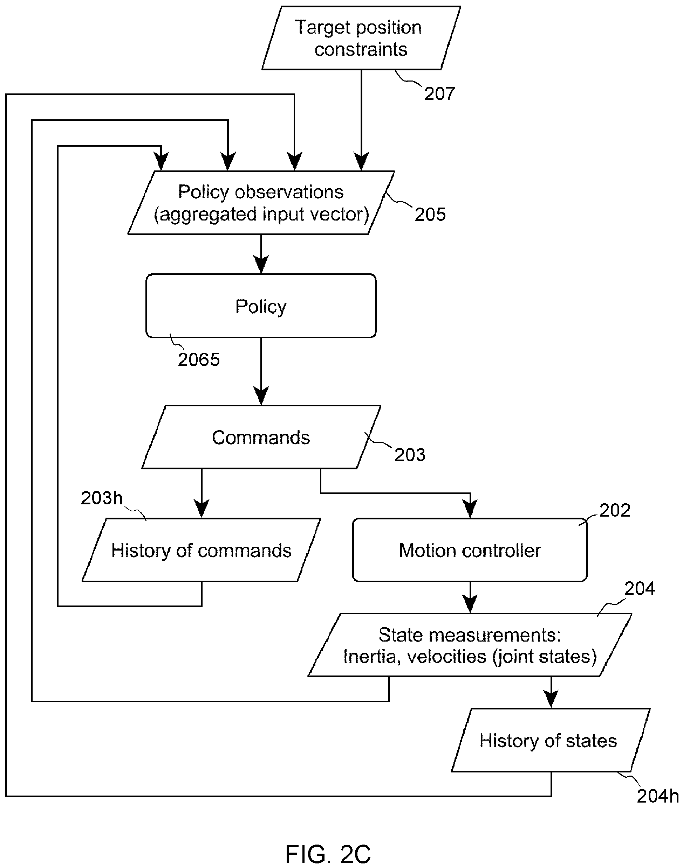

The method leverages a control policy 2065, which is assumed to have been trained with RL. The method repeatedly performs algorithmic cycles (step S30 in FIG. 3), where each algorithmic cycle comprises steps of updating (step S31) state data 204, generating (step S35) control commands 203, updating (step S36) a history of control commands, and instructing (step S37) to form control signals to control the machine 1. An example of runtime data flow is shown in FIG. 2C. FIGS. 2A and 2B concern specific training steps, according to embodiments that are discussed later.

The state data 204 (see FIG. 2C) comprise states of the arm joints, the slew joint, and the end effector, as well as a moment of inertia of the material handling machine 1 with respect to the rotation axis of the slew j oint. Note, the rotation axis of the slew joint serves as a reference axis to calculate the moment of inertia. Together with the moment of inertia, the states of the arm joints form, or contribute to form a state of the machine 1, which state is updated at each cycle. The states of the arm joints, the slew joint, and the end effector are updated S31 based on signals received S20 from sensors of the material handling machine 1. The sensors typically comprise proprioceptive sensors (410) arranged on board of the machine 1. Such sensors are configured to provide feedback signals encoding information about position, velocity, and/or pressures at the joints. For example, pressure/velocity sensors can be provided on the slew 14, boom 101, and stick 102 of a hydraulic machine. At runtime, though, preferred is to solely rely on position and velocities, while pressures could additionally be used for training purposes, for reasons that will become apparent later.

The control commands 203 are commands for the slew motor 464 and the arm joint actuators 461, 462. They are generated S35 by the control policy 2065 based on the updated state data 204, a history 203h of control commands as previously generated by the control policy, and a target position constraint for the end effector 110, see FIG. 2C. The history of control commands is updated S36 according to the control commands 203 generated last. In addition, the control policy may further use a history of states of the machine (including a history of inertia), see step S32 in FIG. 3.

Eventually, the method instructs S37 to form control signals based on the generated control commands, to control S40 the slew motor 464 and the arm joint actuators 461, 462. Incidentally, step S40 (the actual control of the actuators and motor) can be regarded as forming part of the present methods. A new cycle can start after having generated S37 the control signals and updated S36 the command history 203h (and possibly the state history 204h, too, see step S32).

Some definitions are needed:
- RL agent. An RL agent is an entity that interacts with the machine and its environment, by adhering to a control policy.
- Control policy (or simply policy, for short). In policy-based RL, the goal is to learn an optimal policy, which later defines the agent's behaviour at runtime (i.e., upon deploying the policy), specifying which action to take in a given state.
   ∘ Ideally, the deployment states should be a subspace of the training states, to ensure a reasonable behaviour of the policy controller.
   ∘ In a narrow sense, an RL policy refers to a probability distribution (e.g., a Gaussian) over the action space conditioned on the current state of the system.
   ∘ In the present context, a control policy can be any suitable computational model that was trained with RL to provide outputs determining actions of the machine 1 in response to given inputs that capture a current state of the machine at runtime.
   ∘ In preferred embodiments, this control policy relies on a probability distribution as defined above. More preferably, during deployment, the policy is implemented as a deterministic policy (the mean of the probability distribution is typically used to infer the policy output). The policy controller chooses a single action for each state; a same state always results in a same action. In variants, the policy may be implemented as a stochastic policy, choosing from a probability distribution over actions for each state.
- A policy controller (or simply controller) refers to a module of the agent that implements the control policy. In the present context, the controller is used to perform the algorithmic cycles. The controller notably leverages the control policy learned to generate commands at each cycle. The controller can also be used during the training phase, to train the policy.
- Model. As in a machine learning context, here a model refers to a machine learning model, which the RL framework 206 may use to learn and construct its control policy, as in embodiments discussed below.
- Neural network (NN). An artificial neural network is a nonlinear function approximator that can notably be used to learn the agent's policy and/or to infer low-level commands or to approximate the value function used during training, as in embodiments discussed herein.

Comments are in order. As noted above, the end effector 110 is a device suspended from a pivot at an end of the arm 10 so that it can swing more or less freely. Since the pivot is not frictionless, damping forces will necessarily come into play. In other words, the end effector oscillates as a damped pendulum and can therefore be modelled as a damped pendulum. Depending on its configuration, the end effector 110 may oscillate about one or more axes. In the example of FIG. 1, the end effector 110 (a clamshell grab) can oscillate about two axes, corresponding to axes *x* and *y*, while rotation of the end effector around the z-axis and opening/closing is actuated in this example. Thus, the end effector has six degrees of freedom (DoFs), including two passive DoFs, for which no actuation takes place. The active DoFs concern the slew, boom, stick, tool *z,* and open/close configuration of the end effector, while the passive DoFs concern tool *x* and tool *y*. That is, the end effector 110 is not actively controlled with respect to axes *x* and *y*, while it is actuated with respect to rotations around the *z*-axis (yaw). Moreover, the end effector may be controlled to be opened and closed, possibly by the control policy.

Note, "actuation" refers to active joints (e.g., a motor or cylinder), for which the policy outputs control commands, as opposed to passive joints. Here, the policy keeps the tool oscillations under control by outputting control commands that result in actuating joints having active DoFs.

The location of the end effector impacts the moment of inertia of the material handling machine, as experienced by the slew j oint, just like the moment of inertia of someone sitting in a swivel chair would change in accordance with the positions of their arms and legs. Beyond the mere oscillations of the end effector, the moment of inertia of the machine 1 strongly depends on the actual arm configuration, whereby the tool moves closer or farther away from the upper structure (cabin). In that respect, it may be helpful to remind that, for a point mass *m,* the moment of inertia with respect to an axis is equal to *m* × *r*², where *r* is the distance to the axis. In the present context, it is important to take the inertia into account because it appears to substantially influence the behaviour of the slew joint, hence the benefit of generating commands by a RL control policy based on updated states 204 that include the moment of inertia.

The above method concerns steps performed at runtime, i.e., during deployment of the trained control policy. The control policy 2065 is a computational model executing at runtime for inferencing purposes. The policy 2065 is assumed to have already been trained by a policy training algorithm 2064, within an RL framework 206, see FIG. 2B. It will be apparent to the skilled person that actions taken by the control policy at runtime are based on inputs that must be consistent with inputs used during the learning phase (FIG. 2B). That is, the policy must have learned its behaviour based on states 204 of the machine, histories 203h of commands, possibly histories 204h of previous states, too, i.e., training data that consistent with input data as used at runtime.

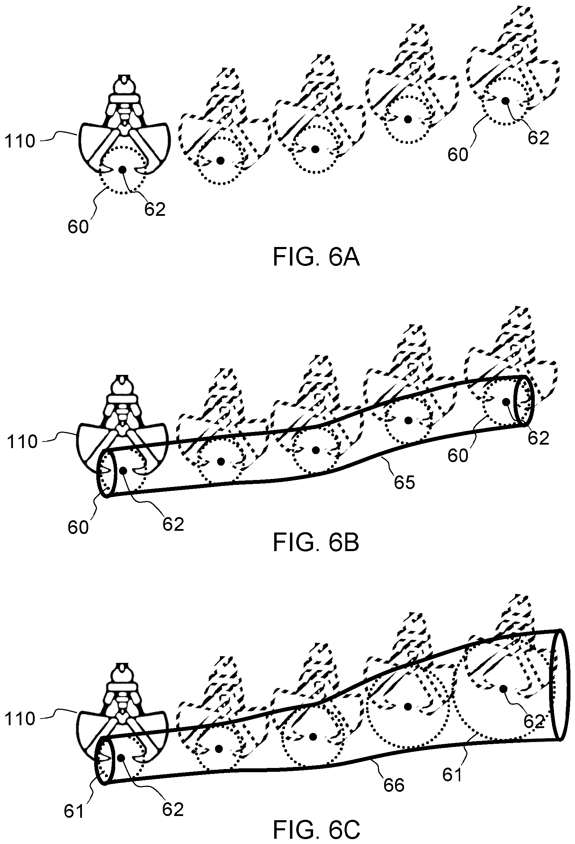

In practice, all inputs can be aggregated in a single input vector 205, as assumed in FIGS. 2B and 2C. The histories 203h, 204h may include any number of past events, preferably five. The number of past events, however, depends on the size of the machine and its dynamics, i.e., delays in the actuation. Various rewarding strategies can be contemplated. In embodiments, rewards 210 are given to incentivize the policy to follow end-effector target positions. The latter may take the form of consecutive waypoints defined in the workspace. For example, whether during the training or deployment, the policy may observe the current waypoint (the immediate next target) and some future waypoints (preferably three), see below. More generally, the policy may be incentivized to meet position-related constraints (which may notably correspond to a tubular shape defined around a line connecting waypoints, see FIGS. 6A - 6C), as well as machine limitations.

At runtime, the control signals are formed based on outputs from the control policy. The control policy 2065 may possibly output high- or low-level commands. High-level commands may for instance include joint velocities. Conversely, low-level commands could for instance be valve currents (in the case of a hydraulic machine) or result in adjusting voltages and/or current applied in the case of electric motors.

If the control policy outputs high-level commands, then an additional module is required. This additional module may involve one or more computational models, which may possibly rely on machine learning, too. In variants, this module involves an adaptive control method or rely on usual control approaches, e.g., based on proportional-integral-derivative (PID) controllers or model predictive control (MPC). This module may for instance be a composite computational model involving two or more models, e.g., selected from PID, MPC, and machine learning models.

Preferred is to rely on a policy model that directly outputs valve commands for hydraulic arm joints and the slew motor, based on which signals are generated to control the joint actuators and the slew motor. The outputted commands may also be velocity commands (often referred to as velocity references in literature) for controllers of the boom and stick. Various schemes can be contemplated. For instance, in embodiments, the trained policy directly outputs valve commands for the slew joint motor and velocity references for the controllers of the boom 101 and stick 102 of the arm 10. In all cases, control signals are eventually formed based on outputs from the control policy 2065.

The target position constraint taken into consideration by the policy is a constraint concerning one or more target positions for the end effector 110. Such constraints may notably define a sequence of target points that the end effector must ideally reach (e.g., with a predefined accuracy, which may for instance be defined by a size of corresponding waypoints), a path that the end effector must follow, and/or a volume delimiting acceptable paths. Such points should typically be aligned with the lowest point of the end effector or another reference point of the end effector (e.g., a midpoint, should the end effector be a clamshell grab in open configuration). The target-position constraint may additionally include a tubular constraint that connects two or more target points, whereby the constraint delimits a tubular shape within which the end effector must stay while being actuated. This tubular shape may further have a varying cross-section, as in embodiments discussed later.

The policy is assumed to have been trained to actuate both the slew motor and arm joints at runtime. The control policy 2065 is preferably trained in simulation only, using data-driven models that preferably involve NNs. In addition, a first-principles model is preferably used to model the arm 10 and the end effector 110, whereby the swinging end effector is modelled from first principles, e.g., as a damped pendulum. In variants, all models are data-driven models, including the model governing the (unactuated) end effector 110. In other variants, a data-driven model is used to model the slew, while first-principles models are used to model the arm joint actuators and the end effector. A first-principles model is based on fundamental physical laws and principles to predict the system's behaviour under various conditions. It may for instance rely on rigid-body simulations using well-established physical models of rigid bodies.

As one understands, a range of model configurations can be contemplated for training the policy. In general, the purpose of these models is to approximate the machine as accurately as possible in simulation to minimize the discrepancy between the real machine and simulations and facilitate the transfer from simulations to the real world.

In embodiments where the policy is trained in simulation only, use can be made of NNs to capture the highly nonlinear dynamics of the machine 1, particularly the hydraulic cabin slew motor 14 of the upper carriage 11, incorporating explicit pressure evolution predictions to better handle delays. In addition, the arm 10 can be modelled to be velocity-controllable, while the end effector 110 can be modelled from first principles, e.g., as a damped pendulum, as noted above. Such a combination of models enhances the simulation environment, enabling the training of a policy that can then be transferred to real machines.

The proposed approach makes it possible for the policy to leverage the machine dynamics to improve accuracy, while maintaining large speeds and minimizing oscillations of the end effector. That is, the policy can suitably handle the passive joints (i.e., the damped oscillations), as it can be trained to keep the end-effector oscillations under control, thanks to suitable rewards and truncations. In other words, the policy can be trained to deal with the nonlinear machine dynamics (e.g., stemming mostly from the hydraulic slew motor 464 in case of hydraulic machines and the passive joints), with a view to actively stabilizing the end-effector oscillations. To that aim, a key input variable to the control policy is the moment of inertia of the whole machine 1 (with respect to the slew joint axis), including the arm and the end effector (with its load, if any), hence the need to update the moment of inertia of the machine at each algorithmic cycle.

All this is now described in detail, in reference to particular embodiments of the invention. To start with, the end effector 110 may be autonomously actuated. In particular, the end effector may be actuated once reaching a target position. For example, a gripper 110 could be opened or closed, assuming it is actuatable to handle a load. In that case, step S35 (FIG. 3) further comprises generating, by the policy, control commands 203 for the end effector to pick up or release its load, based on a constraint defining a location where said load is to be picked up or released. Such a constraint can be formulated in accordance with the task considered. Releasing the load may take advantage of a current actuation of the arm 10 to throw the load by exploiting swinging of the end effector 110. To achieve this, the policy 2065 is further trained to open the end effector (e.g., gripper) at the right time. This additional constraint can possibly be formulated in real-time using feedback signals from the sensors, e.g., based on proprioception, as well as exteroception, if necessary. In variants, the end effector can be actuated using commands generated by a further computational model, typically a trained machine learning model, working in parallel to the policy 2065. In further variants, the end effector is manually controlled.

That said, not all types of end effectors may need to be actuated. For example, neither a loading hook nor a wrecking ball is mechanically actuated, at least not intrinsically. Also, some end effectors can be magnetically activated, instead of being mechanically actuated. For instance, tools using large magnets can be used to pick up and release magnetic material.

As noted above, input data used at runtime must be commensurate with input data used to learn the policy. The following discusses particulars of the initial training. One possibility is to learn the policy based on the actual behaviour of the material handling machine 1, operated in real conditions by a human operator. In preferred embodiments, however, the policy is trained in simulation only, with RL, which corresponds to general step S10 in FIG. 3. That is, the behaviour of the material handling machine 1 is simulated to train S 14 the policy, in the interest of simplicity, speed, and exhaustivity (various terrains, behaviours, and tasks can be simulated, with various types of end effectors).

In embodiments, the behaviour of the material handling machine 1 is simulated using one or more models 2061, 2062 of the arm joint actuators 461, 462 and the slew motor 464, as well as a first-principles model 2063 of the suspended end effector 110, as assumed in FIG. 2B. The first-principles model 2063 serves to model the arm 10 and the swinging end effector 110. This means that the policy 2065 is trained S14 based on outputs of the models 2061, 2062 and the first-principles model 2063.

The models 2061, 2062 may for instance involve one or more data-driven models, just to model the slew motor 464. For instance, such models may include a first data-driven model 2061 and a second data-driven model 2062, which serve to model the slew actuator. The first model 2061 takes as input control commands and outputs the pressure evolution, while the second model 2061 predicts the velocity from the pressure evolution. The same dual NN architecture can actually be used for each joint actuator (or motor), including any of the arm joint actuators. In variants, one or more first-principles models are used to model the arm joint actuators. Such models 2061 - 2063 can output all relevant data for the RL framework 206 to suitably train the policy 2065, in simulation only. To "model" means to create an artificial, simulated copy of the real system. There remains the problem of how to train the models 2061, 2061.

Referring to FIG. 2A, one possibility is to rely on NNs. For example, use can be made of a first data-driven model and a second data-driven model to model the slew motor, which respectively involve a first NN 2061 and a second NN 2062. The first network 2061 is a network that is trained (step S11 in FIG. 3) to predict evolutions of pressures at the slew joint from input commands, while the second network 2062 is a network that is trained S11 to predict velocities of the slew joint from evolutions of pressure at the slew joint. Typically, these pressures are pressures in the chambers of the pistons or motor that actuate each joint.

In addition to the slew joint, use can be made of information on one or more of the arm joints. There, a dual set of NNs can be used to model each joint actuator. In each case, a first NN and a second NN are used to increase the simulation fidelity, as opposed to mere rigid-body simulations, which is what standard simulators provide. Still, in variants to the two networks, a single NN can be used to directly predict velocity references from input commands. Note, where a model is to be learned for any of the arm joints, this model would likely need position measurements, in addition to information as to pressures/velocities. On the contrary, since the slew is rotation symmetric, velocities are likely to be sufficient to model the slew joint.

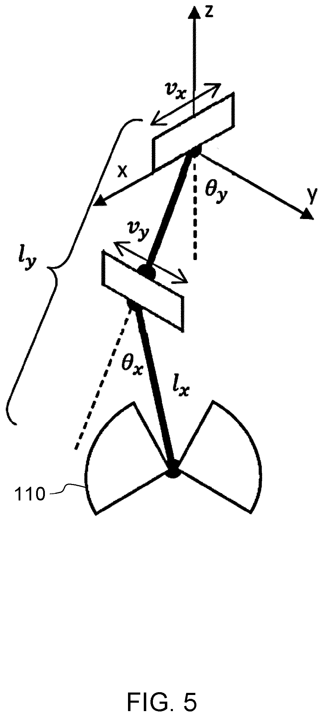

As said, in embodiments, a first-principles model 2063 is used to model the end effector 110 as a damped pendulum. Preferably, the first-principles model 2063 is one that models the end effector 110 as a double pendulum with linearly oscillating support, with decoupled rotations with respect to two axes, as illustrated in FIG. 5, which assumes a clamshell grab 110. These two axes (parallel to *x* and *y*, respectively) are perpendicular to each other and are further perpendicular, each, to the rotation axis of the slew joint (parallel to z, see FIG. 1) in the default (i.e., resting) configuration of the end effector, hanging down. FIG. 5 illustrates the adopted approximations for each single DoF dimension. Here, *θ_{x,y}* denotes the angles between the two joints (unactuated) and the main frame axes, *v_{x,y}* the linear velocities of the tool attachment point, *l_{x,y}* the corresponding link lengths.

In typical embodiments, the material handling machine 1 is a hydraulic machine. Its sensors include proprioceptive sensors 410, which are configured to provide feedback signals encoding information about pressures at the slew j oint and, preferably, at the arm joints, or at least some of the arm joints. Alternatively, or in addition, such proprioceptive sensors may include sensors (e.g., inertial measurement units or other kinematic sensors) providing feedback as to velocities of the slew joint and, preferably, of at least some of the arm joints. Preferred is to rely on velocities at runtime, while both pressures and velocities can be used during the training, to convert input commands to pressures and then pressures to velocities, as noted above.

Referring to FIG. 4, the generated control signals can be low-level signals for low-level controllers 451, 452, 454 of the slew motor 464 and the arm joint actuators 461, 462. In embodiments, the low-level control signals are generated at a frequency of between 5 and 50 Hertz, preferably of approximately 10 Hertz. The velocity reference values can be repeated by the low-level controllers, if necessary. For instance, in embodiments, the RL controller outputs three actions, noted *u*_{slew}, *q̇*_{boom}, and *q̇*_{stick}, where *u*_{slew} is an action meant to directly apply to the slew motor, while *q̇*_{boom} and *q̇*_{stick} denote velocity references for the boom 101 and stick 102. That is, the RL policy controller outputs the three actions above, based on the history of actions and states, the current inertia *I_{z}*, and the task-space targets, and constraints. Such actions are outputted at a frequency of 10 Hertz and are interpreted by the joint controller to provide arm valve inputs at 50 Hertz, using feed forward (FF) and proportional-integral (PI) compensation, while maintaining a constant zero-order hold slew joystick signal for 5 iterations.

Referring now to FIGS. 6A- 6C, the control commands 203 are preferably generated based on one or more target position constraints. Interestingly, the latter can be defined in the task space. The task space is the space, in which the machine's tasks can most naturally be expressed.

Usually, for material handling machines and similar machines, this space is a Cartesian or cylindrical space. Consistently, here the target positions underlying the constraints can be defined in a 3D space corresponding to the physical world, in which the machine 1 evolves. That is, the one or more target position constraints are defined according to one or more target positions for the end effector 110. Conversely, the control commands as generated at runtime correspond to control commands in a configuration space of the slew joint 14 and the arm joints.

In principle, the goal to be achieved by the end effector 110 (as used by the control policy in input) may be formulated in the configuration space of the joints and slew motor, too. Defining this goal in the configuration space of the joints and motor would *a priori* be consistent with outputs from the policy since the latter are formulated in the configuration space. Indeed, the generated commands corresponds to actions to be taken in the joint configuration space. However, doing so would imply to convert target positions from the task space to the configuration space. Thus, it is preferred to generate control commands based on target position constraints formulated in the task space, e.g., using cartesian coordinates of positions to be reached by the end effector 110. This means that no conversion is required as the model has already learned to generate outputs in the configuration space, based on inputs in the task space. In less preferred variants, however, the policy outputs control commands in the task space, in which case use is made of inverse kinematics.

In embodiments, the one or more target position constraints are defined S25 according to at least two target positions, e.g., a start position and an end position. Preferred is to rely on multiple target positions (i.e., waypoints) 62, where each waypoint can for instance subtend waypoint bubbles 60, as assumed in FIGS. 6A - 6C. The target positions can accordingly (contribute to) determine a space of acceptable paths for the end effector 110. For example, the policy may enforce constraints with respect to the bottom tip of the end effector, or another reference point thereof. For instance, in FIGS. 6A- 6C, the end effector is a gripper 110 moving in its open configuration. The reference point of the end effector is taken as the midpoint in-between the clamshells. This reference points should ideally coincide with the target positions 62. This allows the policy controller to exploit the swinging of the end effector, knowing where it has to end and boundaries within which it should remain.

In embodiments, an additional constraint on the end effector position is defined by a tubular shape 65, 66 (see FIGS. 6B and 6C) encompassing two or more of the target positions. Accordingly, a reference point of the end effector 110 must remain within that tubular shape when being actuated according to the generated control signals. The tubular shape 65 can for instance have a cylindrical shape, e.g., having a predefined diameter determined by waypoint bubbles 60 of constant size, as assumed in FIG. 6B. Alternatively, the tubular shape 66 may have a non-constant section between any two target positions, see FIG. 6C. That is, the tubular shape 66 may change shapes, e.g., be narrower where high precision is required (for example near the ground or objects to be grabbed), and be wider where accuracy is less important (for example in the air). So, in the example of FIG. 6C, the size of the bubbles 61 changes throughout the target positions; the tubular shape can be regarded as a convex hull envelope of the bubbles. Other schemes can be contemplated, in which the target positions are used to form constraints that delimit a space of acceptable paths for the end effector 110. In practice, this results in smoother paths, as well as a narrower set of possible paths, between waypoints, which facilitates obstacle avoidance and eventually improves safety.

Another aspect of the invention is now described in reference to FIG. 4, which concerns a computerized system 401 for controlling an autonomous material handling machine 1 as described earlier. That is, the machine 1 has an upper structure 11, an arm 10 with arm joints actuated by arm joint actuators 461, 462, and an end effector 110 suspended from the arm so that it can swing as a damped pendulum. Again, the arm 10 is pivotably connected to the upper structure 11, which can rotate relative to the lower structure 12 through a slew joint 14 around a rotation axis thereof, thanks to a slew motor 464.

The system 401 notably comprises a physical interface, which is adapted to receive signals from a set of sensors 410, 430, including, e.g., proprioceptive sensors 410 and exteroceptive sensors 430. The proprioceptive sensors 410 (e.g., encoders, IMUs, force/torque sensors) are on board the material handling machine 1. Proprioceptive sensors 410 can be arranged in any suitable place, so as to be able to compute states of the slew, arm joints, and end effector. The machine 1 may additionally be equipped with exteroceptive sensors 430 (e.g., Lidars, stereo cameras, depth sensors), if necessary. In variants, the exteroceptive sensors 430 are external sensors. In principle, exteroceptive sensors could be used in place of proprioceptive sensors, to infer states of the machine. Preferred, however, is to solely rely on proprioceptive sensors.

As usual, the system 401 may include processing means and a memory, both forming part of a processing system 400. The processing means may for instance comprise one or more processors (e.g., a CPU, as well as one or more GPUs) reading from and writing to the main memory. Some redundancy may be ensured, if necessary. The system 401 may further include a persistent storage, which stores computerized methods as described earlier in the form of software instructions. Such computerized methods can be loaded in the main memory of the processing system 400, for the processors to implement method steps as described herein. As a result, the processing means can be configured to perform steps of a method according to any of the embodiments described earlier. To that aim, the processing system 400 processes data received through the physical interface. That is, the processing means interface with the sensors through the physical interface, so as to be able to process signals obtained from such sensors.

The control system 401 shown in FIG. 4 includes the sets 410, 430 of sensors. In this example, the control system 401 includes two sensor systems 420, 440, i.e., a proprioceptive sensor system 420 and an exteroceptive sensor system 440, in addition to the processing system 400. The sensor systems 420, 440 have their own processing systems 425, 445, to pre-process sensor signals coming from the sensors. That is, the signals transmitted by the sensors are preprocessed by respective sensor processing systems 425, 445 before being passed to the processing means 400. Beyond the processing means 400 and sensor systems 420, 440, the control system may also integrate the actuation system 450, which notably comprises arm joint controllers 451, 452 and a slew motor controller 454, as well as corresponding actuators 461, 462, and motor 464.

The processing means are configured to repeatedly perform algorithmic cycles, as described earlier in reference to the present methods. Such steps result in generating commands, which are transmitted to the actuation system 450 and, in particular, the controllers 451, 452, 454. The transmitted commands would then be dispatched to individual actuators 461, 462 and motors 464, which components may for instance generate currents to follow the defined commands. This makes it possible to control an autonomous material handling machine 1 equipped with such a control system 401. The transmitted commands may be further processed by the actuation system 450, if necessary, before being dispatched to the actuators 461, 462 and motor 464.

A related aspect of the invention concerns a computer program product for controlling an autonomous material handling machine 1 as described herein. The computer program product comprises a computer readable storage medium having program instructions embodied therewith. The program instructions are executable by processing means 400 (e.g., of a processing system of a control system 401 as shown in FIG. 4) to cause the latter to perform steps of a method according to any of the embodiments described earlier. Section 3 provides additional implementation details related to computer program products and computerized systems as involved in a control system 401 such as shown in FIG. 4.

The above embodiments have been succinctly described in reference to the accompanying drawings and may accommodate a number of variants. Several combinations of the above features may be contemplated. Examples are given in the next section.

### 2. Particularly preferred embodiments

### 2.1. Preferred machine configuration and flows

### 2.1.1. Material handling machine configuration

FIG. 1 shows a material handling machine 1, which comprises a lower structure 12 and an upper structure 11. The upper structure 11 is capable of rotating relative to the lower structure 12 through a slew joint 14, thanks to a slew motor. The upper structure 11 contains the machinery's operating cabin and control systems, while the lower structure 12, which may include tracked or wheeled components, provides mobility across a terrain. The arm 10 is pivotably mounted (around the *y*-axis) relative to the upper structure 11 of the machine 1. The arm has multiple links, i.e., a boom 101 and a stick 102, both of which are equipped with joints that enable pivotal connections and are actuated by arm joint actuators. The stick 102 supports an end effector 110 (clamshell grab) at its extremity, to allow material manipulation. The end effector 110 is suspended and can oscillate around two perpendicular axes, identified as Tool *x* and Tool y in FIG. 1, as a damped pendulum.

In operation, the boom 101 and stick 102 can pivot, to extend and retract, and thus position the end effector 110. The clamshell grab can be opened and closed and can further be actuated in rotation around the z-axis, so as to enable material handling applications such as gripping, lifting, and transporting objects and/or materials. The material handling machine 1 includes a control system 401 such as shown in FIG 4 and can be operated at least partly autonomously, through movements offering a significant range of motion.

### 2.1.2. Preferred flow

FIG. 3 shows a flowchart illustrating high-level steps of a method for controlling an autonomous material handling machine. The initial training phase S10 includes two primary steps, whereby NNs are first trained S11 (see FIG. 2A) based on signals generated from a data collection controller 201 and a motion controller 202 to subsequently train S14 a control policy (see also FIG. 2B) in accordance with the networks trained. Following the training phase S10, the deployment (or runtime) phase S20 comprises repeated algorithmic cycles S20 - S50. The execution of the control policy S30 begins by updating S31 states of the arm joints and the moment of inertia of the machine. The states of the arm joints and the moment of inertia (contribute to) form the state of the machine. The arm joint states are updated S31 based on sensory data continually acquired S20 from proprioceptive sensors onboard the material handling machine. The state history can subsequently be updated S32, to incorporate the latest computed states. The method further defines S25 target position constraints for the machine's end effector. These constraints guide subsequent actions to ensure that the end effector follows a prescribed path. As suggested by the self-loop at step S25 in FIG. 3, target positions may be continually computed (i.e., dynamically), so as to continually feed a window of target positions, including lookahead positions.

The RL agent's policy infers control commands S35 based on current states, historical data, and the constraints defined. The control commands are computed to meet the constraints defined at step S25. Following the generation of control commands, the command history is updated S36 to include the most recent commands. Low-level control signals are generated S37 from the inferred control commands. These signals are in a format suitable for application to the machine's actuation systems. The generated low-level control signals are utilized to control S40 the arm joints and the slew motor 14. Finally, the method evaluates whether a target position (or some goal) has been reached S50. If so (S50: Yes), the method may conclude the current task, and/or potentially stop the end effector actuation or actuate it (open/close and/or rotation around the z-axis). Otherwise, the method loops back to continue updating states S31 and generating control commands S35, thereby continuously adjusting the machine's operation until the task is completed. A new task may then start.

### 2.1.3. Detailed example of application

In the following, a single RL-based controller is described, which makes it possible to command the slew and arm joints simultaneously, trained in simulation combining data-driven modelling techniques with modelling by first principles. This application relies on NN models, which is deployed during the policy training to capture the highly nonlinear dynamics of the hydraulic cabin slew motor of the upper carriage, incorporating explicit pressure evolution prediction to better handle delays. The arm is modelled to be velocity-controllable, while the suspended end effector is modelled from first principles as a damped pendulum. This combined model enhances the simulation environment, enabling the training of RL controllers that can be transferred to the real machine.

Designed to reach steady-state Cartesian targets, the RL controller learns to effectively leverage the hydraulic dynamics to improve accuracy, maintain large speeds, and minimize end-effector tool oscillations under any load conditions. The resulting controller was tested on a middlesized prototype material handler and has proved to be more accurate than a novice operator, causing fewer tool oscillations. It further competes, in terms of performance, with an experienced operator.

In detail, the proposed approach relies on: (i) A data collection routine and an NN-architecture to model hydraulic motors, leveraging velocity and pressure evolutions to accurately predict delay effects; (ii) A combined modelling approach, partially consisting of a data-driven NNmodel for the slew, partially of first-principles modelling for the arm and end effector (regardless of any actuation thereof); and (iii) An RL agent purely trained in simulation using the mixed model described above, actuating the slew motor and the two arm joints simultaneously. The controller tracks Cartesian position targets on the real machine while effectively reducing the tool oscillations and maintaining a high working speed.

The approach was validated through experiments and evaluation on a prototype 40 t material handler, including comparisons with human operators of various experience levels. This approach was tested on real hardware. The test machine has three hydraulically actuated joints with one DoF each. They are independently controlled via steer-by-wire joystick commands and are subject to delays, dead zones, and nonlinearities. Linear hydraulic cylinders actuate the boom and stick joints, while the slew joint uses a hydraulic motor to rotate. This motor features a binary braking system to slow down the rotation more effectively.

The relationship between pressure and velocity is highly intertwined, and the configuration's inertia plays a crucial role in shaping the pressure and speed curves. Because of the actuation complexity, previous model-based control algorithms appeared to be too unpredictable, resulting in large overshoots and oscillations. In view of this, the present inventors proposed to use a machine learning (ML) approach for both the slew modelling and control. The tool consists of a chain of two unactuated revolute joints (pitch and roll) and one actuated joint for rotations around the vertical axis (yaw). Since the controller solely manages gripper positioning in this example, the yaw joint and the shells opening are disregarded/fixed, reducing the overall motion of the system to five DoFs.

The machine used, specifically developed for autonomous operation purposes, was retrofitted with sensors providing 50 Hz feedback. Encoders on slew, boom, and stick joints, provide position and velocity measurements. As the velocity derives from position data, it suffers from a delay of approximately 0.2 s. Pressure sensors on slew, boom, and stick, measure fluid pressure on both sides of each piston or motor. The cabin and end effector are equipped with inertial measurement units (IMUs), each supplying 3D angular velocities, 3D linear accelerations, and 2D angular orientation. An algorithm is used to estimate the material load in the end effector.

A model-based velocity controller has been formulated for the arm joints, incorporating an FF component and PI feedback compensation. The FF model relies on look-up tables (LUTs); a 25-point look-up table (LUT) is used for each j oint. The FF model maps desired joint velocities to control commands. Such an approach can be deployed for simple isolated hydraulic cylinder control. While this kind of direct control cannot be applied on the slew hydraulic motor, it can be tuned well enough for boom and stick in-air motions, allowing for a convenient decoupling of arm motion planning and low-level cylinder control. With more advanced control methods such as MPC or ML, the tracking can be further improved.

Data collection. The data collection is performed by exciting the slew motor's main modes and exploring the relevant state space. Data is collected in various ways. The largest part of the dataset has been generated by applying artificial excitation signals consisting of regular periodic references. For each reference, the arm configuration was randomized and kept static. Additional data was collected data during manual random movements and real driving situations. Further data was added by deploying an early version of the slew controller trained on the first two data source above (largest part of the dataset and additional data). By recording operations of a driver during a working cycle and the controller operating in a closed loop, the model got more accurate at predicting the state evolution of typical tasks. All the data were then aggregated in a same training set.

Data Augmentation. Various experiments and mechanical analyses led to conclude that the slew rotation dynamics are symmetric. Thus, the dataset was augmented via mirroring, which doubled the number of samples and improved the model accuracy also due to attenuation of the recorded noise effects.

NN model. Use is made of a multilayer perceptron (MLP) to capture the slew dynamics. The network operates on a vectorized input history of states and control commands and predicts the pressure and velocity evolution one step into the future. At variance with previous approaches, the inventors chose to explicitly include measured pressures to better deal with the large delays from command input to velocity response. In particular, both pressure and speed dynamics are learned via two different NNs. Both use a ReLU activation function, with a loss defined as a single-step prediction error.

Simulation Environment. A mixed simulation environment was developed to train the RL controllers. It simulates the full machine using (i) the actuator model for the slew joint dynamics and (ii) an analytic model derived from first principles to simulate the arm and the tool dynamics. For the boom and stick joints, use is made of a first-order system with delay to approximate the velocity tracking performance of the arm controller. The end effector is modelled through the Lagrange principle, as a pendulum with decoupled *x* and y rotations.

Policy Gradient RL. The policy is trained using model-free policy gradient RL. Specifically, a learning scheme based on proximal policy optimization (PPO) was used for 6000 iterations with 50 Hz simulation and 10 Hz control rate. The value function and the policy networks have dimensions [256,128,128], using Tanh activation and a linear output layer.

Domain Randomization. Use is made of domain randomization to bridge the sim-to-real gap. At each step, uniform noise is added to the observations. Random sampling is performed at each environment initialization, with respect to the initial joint positions (avoiding collision configurations), the load, the parameters of the arm controller and the end effector model, and the target.

At runtime, use is made of states of all the joints (including the slew, arm joints, and end effector). A preferred example of a full vector of observations is the following:
- Policy commands (actions) and command history;
- States of the slew, boom, stick, and tool *x* & tool y positions and velocities, and the corresponding state history;
- Next tool target position or waypoints in task space (in cartesian or cylindrical coordinates), augmented with two lookahead targets (meaning 3 waypoints observed in total). The last waypoint is repeated when approaching the last waypoint, so that the dimension of the input vector is unchanged. That is, the waypoints can be regarded as a moving window, in which the last point is repeated to keep this window constant; and
- Moment of inertia, as well as a history thereof.

Optionally, the input vector may further contain:
- A flag reflecting whether the current waypoint is the last or not, consistently with the above remarks as to the window size;
- The current tube diameter, if non-constant;
- The current waypoint bubble radius, if non-constant;
- The tool open/close state, should the policy be trained to pick up/release the load;
- Other DoFs of the tool, e.g., tool z, if required to be actuated for the task at issue.

### 3. Technical implementation details

Computerized devices can be suitably designed for implementing embodiments of the present invention as described herein. In that respect, it can be appreciated that the methods described herein are non-interactive, i.e., automated, although human input may be required in certain cases, e.g., should an anomaly or emergency be detected. Automated parts of such methods can be implemented in software, hardware, or a combination thereof. In exemplary embodiments, automated parts of the methods described herein are implemented in software, as a service or an executable program (e.g., an application), the latter executed by suitable digital processing devices.

In the present context, each processing system is preferably mapped onto one or more respective sets of processors or, even, one or more respective computers. In particular, the system 401 may typically involve several processors or computers, notably if redundancy is sought.

A suitable computer will typically include at least one processor, and a memory (possibly several memory units) coupled to one or memory controllers. Each processor is a hardware device for executing software. The processor, which may in fact comprise one or more processing units (e.g., processor cores), can be any custom made or commercially available processor, possibly subject to some certification.

The memory typically includes a combination of volatile memory elements (e.g., random access memory) and non-volatile memory elements, e.g., a solid-state device. The software in memory may include one or more separate programs, each of which comprises an ordered listing of executable instructions for implementing logical functions. The software in the memory captures methods described herein in accordance with exemplary embodiments, as well as a suitable operating system (OS). The OS essentially controls the execution of other computer (application) programs and provides scheduling, input-output control, file and data management, memory management, and communication control and related services. It may further control the distribution of tasks to be performed by the processors. The methods described herein shall typically be in the form of executable programs, scripts, or, more generally, any form of executable instructions.

In exemplary embodiments, each computer further includes a network interface or a transceiver for coupling to a network (not shown). In addition, each computer will typically include one or more input and/or output devices (or peripherals) that are communicatively coupled via a local input/output controller. A system bus interfaces all components. Further, the local interface may include address, control, and/or data connections to enable appropriate communications among the aforementioned components. The I/O controller may have additional elements, which are omitted for simplicity, such as controllers, buffers (caches), drivers, repeaters, and receivers, to allow data communication.

When a computer is in operation, one or more processing units executes software stored within the memory of the computer to communicate data to and from the memory and/or the storage unit (e.g., a solid-state memory), and to generally control operations pursuant to software instruction. The methods described herein and the OS, in whole or in part are read by the processing elements, typically buffered therein, and then executed. When the methods described herein are implemented in software, the methods can be stored on any computer-readable medium for use by or in connection with any computer-related system or method.

Computer-readable program instructions described herein can be downloaded to processing elements from a computer-readable storage medium, via a network, for example, the Internet and/or a wireless network. A network adapter card or network interface may receive computer-readable program instructions from the network and forward such instructions for storage in a computer-readable storage medium interfaced with the processing means. All computers and processors involved can be synchronized using any suitable protocol, e.g., thanks to timeout messages.

Aspects of the present invention are described herein notably with reference to a flowchart and a block diagram. It will be understood that each block, or combinations of blocks, of the flowchart and the block diagram can be implemented by computer-readable program instructions.

These computer-readable program instructions may be provided to one or more processing elements as described above, to produce a machine, such that the instructions, which execute via the one or more processing elements create means for implementing the functions or acts specified in the block or blocks of the flowchart and the block diagram. These computer-readable program instructions may also be stored in a computer-readable storage medium.

The flowchart and the block diagram in the accompanying drawings illustrate the architecture, functionality, and operation of possible implementations of the computerized systems, methods of operating it, and computer program products according to various embodiments of the present invention. Note that each computer-implemented block in the flowchart or the block diagram may represent a module, or a portion of instructions, which comprises executable instructions for implementing the functions or acts specified therein. In variants, the functions or acts mentioned in the blocks may occur out of the order specified in the figures. For example, two blocks shown in succession may actually be executed in parallel, concurrently, or still in reverse order, depending on the functions involved and the algorithm optimization retained. It is also reminded that each block and combinations thereof can be adequately distributed among special purpose hardware components.

While the present invention has been described with reference to a limited number of embodiments, variants, and the accompanying drawings, it will be understood by those skilled in the art that various changes may be made, and equivalents may be substituted without departing from the scope of the present invention. In particular, a feature (device-like or method-like) recited in a given embodiment, variant, or shown in a drawing, may be combined with or replace another feature in another embodiment, variant, or drawing, without departing from the scope of the present invention. Various combinations of the features described in respect of any of the above embodiments or variants may accordingly be contemplated, that remain within the scope of the appended claims. In addition, many minor modifications may be made to adapt a particular situation or material to the teachings of the present invention without departing from its scope. Therefore, it is intended that the present invention is not limited to the particular embodiments disclosed, but that the present invention will include all embodiments falling within the scope of the appended claims. In addition, many other variants than explicitly touched on above can be contemplated. For example, several architecture variants may be contemplated for the processing system 401, which involves one or more distinct computers. In addition, various other machine learning techniques and computational models may possibly be relied on, which may involve various types of networks, such as recurrent networks or attention-based networks (transformers).

### REFERENCES

- 1: Material handling machine
- 10: Arm
- 11: Upper structure
- 12: Lower structure
- 14: Slew joint/motor
- 101: Boom
- 102: Stick
- 110: End effector
- 201: Data collection controller
- 202: Motion controller
- 203h: History of commands
- 203: Commands
- 204: Observations
- 204h: History of states
- 205: Aggregated input vector
- 206: Reinforcement learning (RL) framework
- 210: Rewards
- 212: Terminations or truncations
- 2061: First neural network to convert commands to pressures
- 2062: Second neural network to convert pressures to velocities
- 2063: First-principles model
- 2064: Policy training algorithm
- 2065: Control policy

## Claims

1. A computer-implemented method of controlling an autonomous material handling machine (1) including a lower structure (12), an upper structure (11), an arm (10) with arm joints actuated by arm joint actuators (461, 462), and an end effector (110) suspended from the arm so that it can swing as a damped pendulum, wherein the arm (10) is pivotably connected to the upper structure, which can rotate relative to the lower structure through a slew joint (14), around a rotation axis of the slew joint, thanks to a slew motor (464), and wherein the method comprises repeatedly performing (S30) algorithmic cycles, wherein each cycle of the algorithmic cycles comprises:
updating (S31) state data (204), which comprise states of the arm joints, the slew joint, and the end effector, and a moment of inertia of the material handling machine (1) with respect to the rotation axis, based on signals received (S20) from sensors of the material handling machine (1);
generating (S35), by a control policy (2065) trained with reinforcement learning, control commands (203) for the slew motor (464) and the arm joint actuators (461, 462), based on the updated state data (204), a history (203h) of control commands previously generated by the control policy, and a target position constraint for the end effector (110); and
updating (S36) the history of control commands according to the control commands (203) generated last and instructing (S37) to form control signals based on the generated control commands to control (S40) the slew motor (464) and the arm joint actuators (461, 462).

2. The method according to claim **1,** wherein
the control commands (203) are generated (S35) based on one or more target position constraints defined in a task space, according to one or more target positions for the end effector (110), whereas
the generated control commands correspond to control commands in a configuration space of the slew joint (14) and the arm joints.

3. The method according to claim **2,** wherein
the one or more target position constraints are defined (S25) according to at least two target positions, so as to delimit a space of acceptable paths for the end effector (110).

4. The method according to claim **3,** wherein
the one or more constraints define a tubular shape encompassing two or more of said target positions, whereby the end effector must remain within that tubular shape when being actuated according to the generated control signals, and
the tubular shape preferably has a non-constant section between the two target positions.

5. The method according to claim **4,** wherein
the end effector is actuatable to handle a load,
generating (S35) the control commands (203) further comprises generating (S35), by the policy, control commands (203) for the end effector to pick up or release its load, based on a constraint defining a location where said load is to be picked or released.

6. The method according to any one of claims **1** to **5,** wherein
the method further comprises a preliminary step of training (S10) the policy in simulation only, with reinforcement learning, whereby a behaviour of the material handling machine (1) is simulated to train (S14) the policy.

7. The method according to claim **6,** wherein
the behaviour of the material handling machine (1) is simulated using one or more models (2061, 2062) of the arm joint actuators (461, 462) and the slew motor (464), as well as a first-principles model (2063) of the suspended end effector, whereby the policy (2065) is trained (S14) based on outputs of the one or more models and the first-principles model.

8. The method according to claim **7,** wherein
the one or more models (2061, 2062) comprise
one or more data-driven models to model the slew motor (464), and
either one or more data-driven models or a first-principles model to model each of the arm joint actuators.

9. The method according to claim **8,** wherein
the one or more data-driven models include a first data-driven model and a second data-driven model, which include a first neural network (2061) and a second neural network (2062), respectively,
the first neural network (2061) is a network that has been trained (S11) to predict evolutions of pressures at the slew joint from input commands, and
the second neural network (2062) is a network that has been trained (S11) to predict velocities of the slew joint from evolutions of pressures at the slew joint.

10. The method according to any one of claims **7** to **9,** wherein
the first-principles model (2063) models the end effector (110) as a damped pendulum, the first-principles model (2063) preferably models the end effector (110) as a double pendulum with linearly oscillating support, with decoupled rotations with respect to two axes, which are perpendicular to each other and are further perpendicular, each, to said rotation axis in a resting configuration of the end effector.

11. The method according to any one of claims **1** to **10,** wherein
the material handling machine (1) is a hydraulic machine, and
the sensors include proprioceptive sensors (410), which are configured to provide feedback signals encoding information about
pressures at the slew joint and, preferably, at the arm joints, or at least some of the arm joints, and/or
velocities of the slew joint and, preferably, of at least some of the arm joints.

12. The method according to any one of claims **1** to **11,** wherein
the generated control commands (203) capture velocity references for the arm joint actuators (461, 462) of a boom (101) and a stick (102) of the arm (10), and further include valve commands for the slew motor (464).

13. The method according to any one of claims **1** to **12,** wherein
the generated control signals are low-level control signals for low-level controllers (451, 452, 454) of the slew motor (464) and the arm joint actuators (461, 462), and
the low-level control signals are generated at a frequency of between 5 and 50 Hertz, preferably of 10 Hertz.

14. A computerized system (401) for controlling an autonomous material handling machine (1) including a lower structure (12), an upper structure (11), an arm (10) with arm joints actuated by arm joint actuators (461, 462), and an end effector (110) suspended from the arm so that it can swing as a damped pendulum, wherein the arm (10) is pivotably connected to the upper structure, which can rotate relative to the lower structure through a slew joint (14), around a rotation axis of the slew joint, thanks to a slew motor (464), wherein the system comprises:
a physical interface adapted to receive signals from a set of sensors (410, 430), which are on board the material handling machine (1); and
processing means (400) configured to perform all the steps of the method according to any of claims **1** to **13.**

15. Computer program product for controlling an autonomous material handling machine (1) including a lower structure (12), an upper structure (11), an arm (10) with arm joints actuated by arm joint actuators (461, 462), and an end effector (110) suspended from the arm so that it can swing as a damped pendulum, wherein the arm (10) is pivotably connected to the upper structure, which can rotate relative to the lower structure through a slew joint (14), around a rotation axis of the slew joint, thanks to a slew motor (464), the computer program product comprising a computer readable storage medium having program instructions embodied therewith, the program instructions executable by processing means of a controller to cause the latter to perform all the steps of the method according to any one of any of claims **1** to **13.**
